# EUROPEAN PATENT APPLICATION

(11) **EP 1 285 620 A1**
(43) Date of publication of application: **26.02.2003**
(21) Application number: 02009470.2
(22) Date of filing: 25.04.2002
(51) Int. Cl.: A47J 43/25, B27G 17/06, B23D 71/04

(54) **Ribbon tooth, cutting tool including ribbon teeth, and method of forming a ribbon tooth**

(30) Priority: 20.08.2001 US 932782
(71) Applicant: Grace Manufacturing Inc., Russellville, Arkansas 72801 (US)
(72) Inventor: Chalfant, Louis, Russellville, Arkansas (US)
(74) Representative: Ebner von Eschenbach, Jennifer

(57) **Abstract**

A ribbon tooth (12) and the method of making the same in which a photochemical process is used to form a tooth which, when raised above the plane of the base material (10) in which it is formed, presents a sharpened edge portion to the surface of a work piece such that movement of the tooth across the work piece will result in the removal of a controlled amount of material therefrom.

## Description

The present invention relates generally to tools for the removal of controlled amounts of material from a work piece and, more particularly, to improvements in cutting teeth formed on a carrier and, together, defining a cutting tool.

### BACKGROUND OF THE INVENTION

### Field of the Invention

The present invention relates to teeth, and the formation thereof, as a part of tools for removing controlled amounts of material from a work piece. The work piece itself may be a food stuff, and the tool, a kitchen utensil, or it may be a rasp, file, plane, or the like, in the work shop, for working on a piece of wood, plastic or metal. Such tools take many well known forms, the more recognizable of which include, e.g., food graters, a staple in most kitchens.

There are a variety of other kitchen utensils for cutting, shredding and shaping vegetables, cutting potatoes into french fries and the like, as well as shredding, such as for cabbage, lettuce, and cheeses.

A common theme among such tools is the formation of an upstanding projection, typically having a point, and thin edges about the point, the edges being capable of being sharpened such that when contact is made with a work piece and the two are moved relative to one another, a portion of that work piece is removed.

### Overview of the Related Art

Whether in the kitchen or the workshop, there has always been a need for a workable tool that would permit the user to remove a controlled amount of material from a work piece. In the kitchen, in particular, the need is often to reduce a work piece to a usable size, such as in the grating of cheeses and vegetables. The key to the success of such tools typically lies in the knife, or tool, which accomplishes the cutting, grating or shaving.

Several inventors have obtained patents for such tools, e.g., Richards Patent number 2,447,714 relating to a food grater. While the focus of the invention is the ability of the grater to be secured to a receptacle such as a bowl, Richards teaches the stamping out of the grater teeth, which he refers to as cutters. The cutters are upstanding sharp teeth which are formed in the stamping process and which tear away the material being worked, presumably vegetables, as the work piece is moved over the surface of the grater.

In a similar fashion, but in a somewhat different application, Theobald et al. Patent number 3,389,447 provides upstanding teeth, best seen in FIG. 3 of that patent, and the variations thereon, for use as a rasp or file and is applicable in a work shop. Theobald et al. designed their tooth, or as it is referred to, sharpened arcuate lips, to be omnidirectional in that the sharpened edges face fore and aft of the tool.

Borner has two issued patents in the field, number 4,790,488 and number 4,848,680, both of which relate to kitchen utensils. Borner's devices differ from the patent art described previously in that Borner's devices are designed to cut and shape food stuffs into larger sections, such as french fries ('488), or similar food stuffs into small strips or sections ('680). To that end, Borner provides "U" shaped grooves in which knives are formed to cut material that comes into contact with the knives.

In contradistinction to the present invention, the overriding theme of these patents, as well as the various tools currently in use, is to form, primarily by stamping, a sliver of metal which is pressed upwardly into the path of a work piece, where the resultant sliver engages a workpiece to tear away a portion thereof as it is moved relative thereto.

### SUMMARY OF THE INVENTION

By way of contrast to the existing state of the art in which surfaces are protruded into the path of a work piece by stamping or other forming process, which surfaces are incapable of being efficiently or economically sharpened, the present invention uses a method similar to that taught in Sturtevant et al. Patent number 5,100,506, to photochemically create a ribbon of material that remains integral with the plate from which it is formed, while being capable of having at least a portion of it raised into the path of a work piece and at least the portion in the path of the work piece being uniformly and finely sharpened by the same process that causes its formation, to provide a stable cutting tooth for the removal of a controlled amount of material from a work piece.

Accordingly, the present invention enriches the art with the provision of a ribbon tooth, which is formed by etching, as distinguished from stamping or similar mechanical processes, thereby creating an exceptionally uniform sharp tooth that has great stability in extended use. The ribbon tooth provides continuous edges, both, or a portion of which are sharpened by the etching process, and which are capable of removing controlled amounts of material from a work piece, as the two are moved into contact and moved relative to one another.

It is a principal object of the present invention to provide a novel tooth configuration for use primarily, although not exclusively, in hand tools, which tools are in common use in the kitchen and in the work shop to remove controlled amounts of a work piece, whether it be a vegetable or a piece of wood or metal.

It is another objective of the present invention to form a plurality of ribbon teeth in which the tooth comprises a continuous strip of base material in which edges are formed, which are capable of being simultaneously created and sharpened and, thereafter, raised above the plane of the base material to thereby interact with the surface of a work piece when moved across the surface there to remove controlled amounts of material therefrom.

An objective related to the foregoing is to create a tool having multiple ribbon teeth which will quickly and efficiently remove controlled amounts of material from the surface of a work piece, while remaining sharp and without clogging by removed material.

It is a further and additional object of the present invention to disclose a method of forming a ribbon tooth which, when combined with other, substantially identical such ribbon teeth, define a tool for the controlled removal of material from a work piece. Yet another objective of the method herein disclosed it to permit formation of the ribbon tooth from a metallic base material that may vary significantly in thickness and hardness depending on the application contemplated and without diminution in the quality or efficiency of the tooth.

It is yet another, and still further objective of the present invention, to create a ribbon tooth as herein described which may remove controlled amounts of material from a work piece in the plane of movement of the tooth relative to the work piece in either direction.

The foregoing, as well as additional objects and advantages of the invention, will become apparent to those skilled in the art from a further reading of the Detailed Description of a Preferred Embodiment, taken in concert with the accompanying drawings, wherein:

### DESCRIPTION OF THE DRAWINGS

FIG. 1 is a perspective view of a single ribbon tooth formed in accordance with the present invention;
FIG. 2 is a view of the ribbon tooth of the present invention, taken along line 2-2 of FIG. 1;
FIG. 3 is a top plan view of a base sheet of material upon which an etch resistant coating has been photochemically applied, thereby illustrating the base sheet, from which a ribbon tooth is formed, as it would appear immediately prior to being etched;
FIG. 4 is a pictorial illustration of an exemplary tool upon which a plurality of ribbon teeth constructed in accordance with the present invention has been formed;
FIG. 5 is a cross sectional and segmented view of a portion of the base sheet of FIG. 3, greatly magnified, illustrating the etch resistant coating which has been selectively applied to the top and bottom surfaces of the sheet; and
FIG. 6 is a view similar to FIG. 5, again greatly magnified, illustrating an etching process as it is initiated, and its effect on the base sheet as coated in the manner of FIGS. 3 and 5.

### DETAILED DESCRIPTION OF A PREFERRED EMBODIMENT

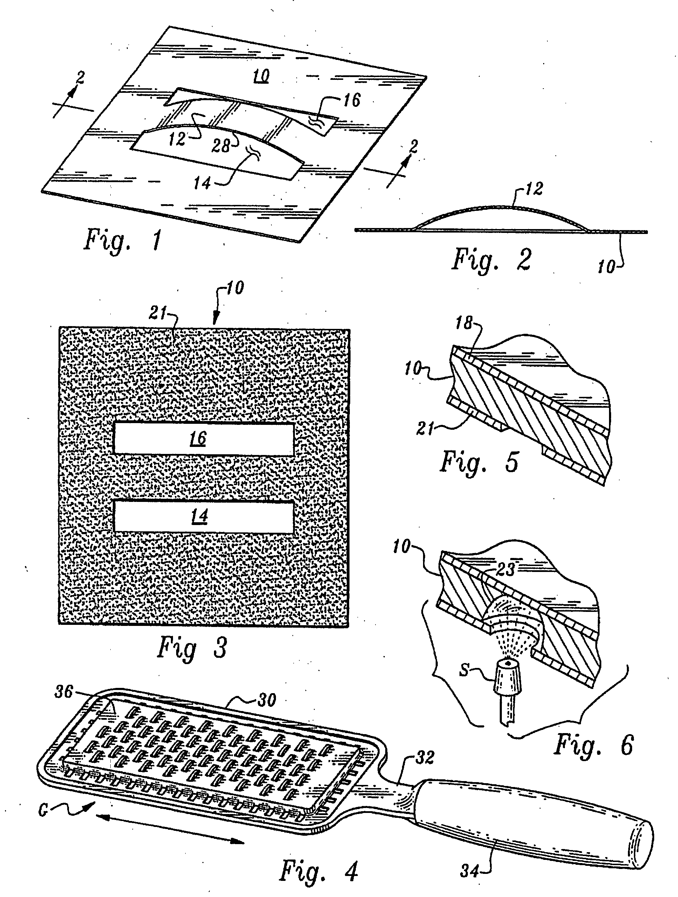

With reference now to the drawings, and initially to FIG. 1, a sheet, or plate, of base material is depicted at 10. It will be understood that while the sheet 10 is shown as rectangular in shape, and that shape provides an excellent escape for removed material, the specific is by way of illustration only, and it is not intended to be a limiting factor in the practice of the invention.

FIGS. 1 and 2 together illustrate a novel ribbon tooth 12, formed in accordance with the teachings of the present invention. The tooth 12 consists of a length of base material 10, which has been segregated and shaped by the removal of base material on either side of the tooth, the removal of which forms openings 14 and 16, respectively.

By virtue of the process employed, the base material 10, which is metallic, may vary widely in both its thickness and strength to accommodate a variety of tasks on work pieces which may have a wide range of hardness. Similarly, the size and shape of the openings is greatly exaggerated for ease in visualization, and the openings 14 and 16 may be as narrow as mere slots flanking the tooth 12, or as big and especially shaped as may be needed for a specific application, at the discretion of the maker.

As alluded to above, the openings provide a salutary benefit in that a space is provided for the discharge of material that has been removed by the tooth, especially where such material has a tendency to adhere to the work piece or the base material, and clog up the tooth.

It will be appreciated, particularly as viewed in FIG. 2, that the ribbon tooth is, in accordance with the invention, raised above the plane of the sheet 10 and, as shown, in an arcuate contour, although the specific contour may vary in accordance with the application. This is accomplished in accordance with the invention by one of several well known means, such as by stamping, in which the tooth is stretched, or perhaps pressed into a pre shaped die to provide the specific configuration desired.

The formation of the ribbon tooth 12 is a vital part of an instrument for the removal of controlled amounts of material from a work piece. Such tools are useful, for example, in preparing a vegetable in those instances where the ribbon tooth forms a part of a kitchen device such as a grater or shredder, or in the case of a shop tool, the work piece may be a piece of wood, plastic or metal. The formation of the ribbon tooth of the present invention is most precisely and efficiently accomplished by a photochemical etching process such as disclosed in Patent number 5,100,506, and is, therefore, not recited in great detail here.

Accordingly, in keeping with the invention, and with specific reference to FIGS. 3, 5 and 6, the sheet 10 of base material, is first coated with a material which is resistant to chemical etching, sometimes referred to in the art is resist material. There are several such materials, and the selection is left to the discretion of the user.

That coating is applied so as to form a continuous protective layer 18 on one side of the sheet 10, while a layer 21 is applied to the opposite side thereof.

As best seen in FIGS. 3 and 5, the layer 21 does not cover the entire surface of the sheet 10. Rather, it is applied to define one or more gaps, or voids, in the coating, which leaves bare metal exposed to the etching chemical, of which several are known in the art and are sometimes referred to as etchant. In the illustrated case, those gaps define the size and shape of the openings 14 and 16. Accordingly, when etching material is applied against the layer of etch resistant material, the exposed surface area, i.e., the area which is not coated with etch resistant material, is attacked by the etching chemical, which may be applied such as by spray nozzle S, and the exposed metal is removed, exposing, progressively the material beneath the surface to the etchant, which is in turn attacked and removed.

Judicious application of the etchant results in a concavity in the surface attacked as the material is etched and removed through the depth of the sheet 10 until it impinges on the layer 18 of the etch resistant material. The controlled application of etchant results in the creation of a sharp, uniform edge 23 along the longitudinal terminus of the ribbon tooth. It will be appreciated that the same sharp edge is readily created on both of the edges of the ribbon tooth, to the extent desired, without departure from the invention.

With reference now to FIG. 4, the technology used to create the novel ribbon tooth is readily applied to create a variety of hand and other tools. By way of example, a grater G is formed by providing a frame 30, which in the illustrated case, is rectangular. The frame is formed, or otherwise fitted, with a tongue 32, which receives and secures a handle 34 to the frame 30 to thereby permit digital manipulation of said frame, and thus, the tool.

A plate 36, comprises an elongate sheet of metallic plate material upon which is formed a plurality of ribbon teeth 12, created in the manner of the present invention. While the pattern of teeth on the plate 36 is shown as uniform, it is not beyond the scope of the invention to create a random pattern, although such a pattern is not known to be practical. Further, by causing both longitudinal termini to be etched with a sharp edge, the tool having such teeth will remove material in the plane of movement of the tool relative to the work piece, where such action is appropriate.

In the example shown, optimum use of the handle 34 is achieved by pushing and pulling the plate, which is secured to the frame 30 in one of many known ways, across the surface of the work piece. To this end, rows of serially spaced teeth span the breadth of the plate with the sharp edges of the ribbon teeth 12 disposed transverse to the direction of contemplated movement of the tool, i.e., forward and to the rear along the longitudinal axis of the tool, as shown by the direction of the arrow A in FIG. 4. By forming a sharp edge on both parallel termini of the tooth, the tool is effective in the removal of material in both directions.

In keeping with this aspect of the invention, parallel rows of teeth extend the length of the plate 36, and adjacent rows are staggered in order to assure that there are no ridges formed between adjacent teeth, thereby providing a smooth surface over the plane of the path of the tool G.

Those skilled in the art will appreciate that the ribbon tooth of the present invention may take myriad forms without departure from the tooth configuration or the method of formation.

By way of example, the tooth 12, while shown in an arcuate form, may be stamped or otherwise formed in a rippled configuration, or such other configuration as meets the needs of the tool to which it is to be applied. The openings 16 may be shaped in any one of several ways by simply applying the etch resistant coatings 18 and 21 in any desired pattern, and the resultant longitudinal termini of ribbon tooth 12 may comprise parallel edges as shown, or may have a specific shape in which the edges are saw toothed, rounded, or otherwise configured so as to be not parallel, and, of course, one or both of those edges may be as sharp as the maker may deem appropriate to its use.

Having now described a preferred embodiment of the invention, and suggested variations on the basic theme of the invention, what is claimed is:

## Claims

1. A ribbon tooth formed as part of a cutting tool, adapted to remove controlled amounts of material from a work piece, said ribbon tooth comprising:
a sheet of metallic material;
opposed slots formed in said sheet;
said opposed slots together defining said length of metallic material between them;
said length of metallic material defining the shape of said ribbon tooth, said ribbon tooth having opposed longitudinal edges; at least a portion of one of said edges of said ribbon tooth defining a cutting edge;
said cutting edge portion of said ribbon tooth being raised above the plane of said sheet of metallic material such that movement of said sheet of metallic material on the surface, and relative to the surface of a work piece, results in a controlled portion of said work piece being removed by said ribbon tooth.

2. The ribbon tooth of Claim 1, wherein said ribbon tooth forms an arc with said sheet of metallic material.

3. The ribbon tooth of Claim 1, wherein said cutting edge is transverse to the movement of said tooth relative to said work piece.

4. The ribbon tooth of Claim 1, wherein said sheet of metallic material is photochemically etched to form said slots and at least one cutting edge there between.

5. The ribbon tooth of Claim 1, wherein both said longitudinal edges define cutting edges.

6. The ribbon tooth of Claim 1, wherein said ribbon tooth forms an arc with said sheet of metallic material, said sheet of metallic material being photochemically etched to form said slots and at least one cutting edge there between.

7. The ribbon tooth of Claim 1, wherein said ribbon tooth forms an arc with said sheet of metallic material, both said opposed longitudinal edges defining cutting edges.

8. A cutting tool for removing a controlled amount of material from the surface of a work piece, said tool including:
a frame, a handle on said frame for digitally moving said frame;
a plate, said plate disposed in said frame, said plate having a plurality of ribbon teeth formed thereon, said ribbon teeth having opposed longitudinal edges, a least a portion of one of said longitudinal edges defining a cutting edge, said portion of said longitudinal edges being raised above the plane of said plate;
said ribbon teeth on said plate being spaced so as to present a cutting edge to at least the entire breadth of said plate; and
said tool being movable on, and relative to, the surface of the work piece to remove controlled amounts of material therefrom.

9. The tool of Claim 8, wherein said ribbon tooth forms an arc with said sheet of metallic material.

10. The tool of Claim 8, wherein the cutting edge is transverse to the movement of said tooth relative to said work piece.

11. The tool of Claim 8, wherein said sheet of metallic material is photochemically etched to form said slots and cutting edge.

12. The tool of Claim 8, wherein said opposed longitudinal edges both define cutting edges.

13. The method of forming a ribbon tooth comprising the steps of:
to a sheet of metallic material having opposed surfaces,
applying a coating resistant material over the entire area of one of said surfaces;
applying a coating resistant material over the greater portion of said opposed surface, leaving gaps of unprotected metallic material exposed;
applying an etchant to the said opposed surface directly on said exposed areas to thereby etch away said exposed metallic material.

14. The method of Claim 13, wherein said gaps are longitudinally extending.

15. The method of Claim 13, wherein said gaps are parallel.

16. The method of Claim 13, wherein said gaps are longitudinally extending and are parallel.

17. The method of Claim 13, wherein said gaps are rectangular in shape.

18. The method of Claim 13, wherein the space between adjacent gaps is raised above the plane of said sheet of metallic material.

19. The method of Claim 18, wherein said gaps are longitudinally extending and are parallel.
